# EUROPEAN PATENT SPECIFICATION

(11) **EP 3 928 113 B1**
(45) Date of publication and mention of the grant of the patent: **14.10.2026**
(21) Application number: 20714984.0
(22) Date of filing: 24.03.2020
(51) Int. Cl.: G07C 9/28, G07C 9/29, G01S 13/76, H04W 4/80

(54) **ULTRA-WIDE BAND DEVICE FOR ACCESS CONTROL READER SYSTEM**
ULTRABREITBANDIGE VORRICHTUNG FÜR ZUGANGSKONTROLLLESESYSTEM
DISPOSITIF À BANDE ULTRALARGE DE SYSTÈME DE LECTEUR DE CONTRÔLE D'ACCÈS

(30) Priority: 25.03.2019 US 201962823341 P; 27.09.2019 US 201962906995 P
(43) Date of publication of application: 29.12.2021
(73) Proprietor: ASSA ABLOY AB, 107 23 Stockholm (SE)
(72) Inventor: PIRCH, Hans-Juergen, 9560 Feldkirchen (AT); EINBERG, Fredrik Carl Stefan, 141 41 Huddinge (SE); JONSSON, Tomas Lars, 144 62 Rönninge (SE); PREVOST, Sylvain Jacques, Austin, Texas 78717 (US); STEFFL, Jan, 27301 Senomaty (CZ); FRANK, Hans Gunnar, 163 51 Spånga (SE)
(74) Representative: Kramer Barske Schmidtchen Patentanwälte PartG mbB
(86) International application number: PCT/EP2020/058197
(87) International publication number: WO 2020/193566

(56) References cited:
- WO-A2-2017/181132
- CN-A- 104 661 308
- KR-A- 20190 023 713
- US-A1- 2018 234 797
- US-A1- 2019 052 314

## Description

### TECHNICAL FIELD

Embodiments of the present disclosure relate generally to access control systems and more specifically to embodiments of an ultra-wide band (UWB) device for access control systems.

### BACKGROUND

Physical access control covers a range of systems and methods to govern access, for example by people, to secure areas or secure assets. Physical access control includes identification of authorized users and/or devices (e.g., vehicles, drones, etc.) and actuation of a gate, door, or other mechanism used to secure an area or actuation of a control mechanism, e.g., a physical or electronic/software control mechanism, permitting access to a secure asset. A PACS can include a reader (e.g., an online or offline reader) that holds authorization data and can be capable of determining whether credentials (e.g., from credential or credential devices such as radio frequency identification (RFID) chips in cards, fobs, or personal electronic devices such as mobile phones) are authorized for an actuator (e.g., door lock, door opener, software control mechanism, turning off an alarm, etc.). In other examples, a PACS can include a host server to which readers and/or actuators (e.g., via a controller) are connected in a centrally managed configuration. In centrally managed configurations, readers can obtain credentials from a credential or credential device and pass those credentials to the PACS host server. The host server can then determine whether the credentials authorize access to the secure area and command the actuator or other control mechanism accordingly.

US 2018/234797 A1 discloses methods and devices for allowing a mobile device (e.g., a key fob or a consumer electronic device, such as a mobile phone, watch, or other wearable device) to interact with a vehicle such that a location of the mobile device can be determined by the vehicle, thereby enabling certain functionality of the vehicle. A device may include both RF antenna(s) and magnetic antenna(s) for determining a location of a mobile device relative to the vehicle. It is claimed that such a hybrid approach provides various advantages. Existing magnetic coils on a mobile device (e.g., for charging or communication) may be re-used for distance measurements that are supplemented by the RF measurements. Any device antenna may provide measurements to a machine learning model that determines a region in which the mobile device resides, based on training measurements in the regions.

WO 2017/181132 A2 refers to a secure ranging system using a secure processing system to deliver one or more ranging keys to a ranging radio on a device, and the ranging radio can derive locally at the system ranging codes based on the ranging keys. A deterministic random number generator can derive the ranging codes using the ranging key and one or more session parameters, and each device (e.g. a cellular telephone and another device) can independently derive the ranging codes and derive them contemporaneously with their use in ranging operations.

KR 2019 0023713 A describes a system for localization of distribution at an indoor warehouse and tracking the transferring device's moving line and the method therefor.

CN 104 661 308 A refers to a waist type wearable indoor mobile positioning terminal.

US 2019/052314 A1 discloses a method of managing communication between a portable device and a contactless reader able to communicate using a first wireless technology configured to communicate in a short-range mode. The method comprises the steps of: -establishing a first channel between the contactless reader and a wireless unit, -establishing between the wireless unit and the portable device a second channel using a second wireless technology which is configured: -to operate with a range greater than that of said first wireless technology, -to detect the position of the portable device with respect to the wireless unit, -to handle an anti-collision phase, -establishing a bridge between the contactless reader and the portable device through said first and second channels only if the detected position of the portable device matches with the contactless reader.

### BRIEF DESCRIPTION OF THE DRAWINGS

A more detailed understanding may be had from the following description, which is presented by way of example in conjunction with the following drawings, in which like reference numerals are used across the drawings in connection with like elements.
FIG. 1 depicts an example scenario in which a physical access control system (PACS) that includes an example reader system could be used, in accordance with at least one embodiment.
FIG. 2 depicts an example communication context in which the PACS of FIG. 1 could operate, in accordance with at least one embodiment.
FIGS. 3A and 3B depict example architectures of the reader system of FIG. 1, in accordance with at least one embodiment.
FIG. 4 depicts an example architecture of the reader system of FIG. 1, in accordance with at least one embodiment.
FIG. 5A-5G collectively depict an example architecture of an ultra-wide band module of the reader system of FIG. 1, in accordance with at least one embodiment.
FIG. 6 is a block diagram illustrating an example of a machine upon which one or more embodiments may be implemented.

### DETAILED DESCRIPTION

Disclosed herein are embodiments of an ultra-wideband (UWB) module for a physical access control system (PACS). UWB is a radio frequency (RF) technique that uses short, low power, pulses over a wide frequency spectrum. The pulses can occur on the order of millions of times per second. The width of the frequency spectrum of a given UWB implementation is generally greater than the lesser of 500 megahertz (MHz) and twenty percent of an arithmetic center frequency of the frequency spectrum for the given UWB implementation.

UWB can be used for communication by encoding data via time modulation (e.g., pulse-position encoding). Here, symbols are specified by pulses on a subset of time units out of a set of available time units. Other examples of types of UWB encodings include amplitude modulation and polarity modulation. The wide band transmission tends to be more robust to multipath fading than carrier-based transmission techniques. Further, the lower power of pulses at any given frequency tends to reduce interference with carrier-based communication techniques.

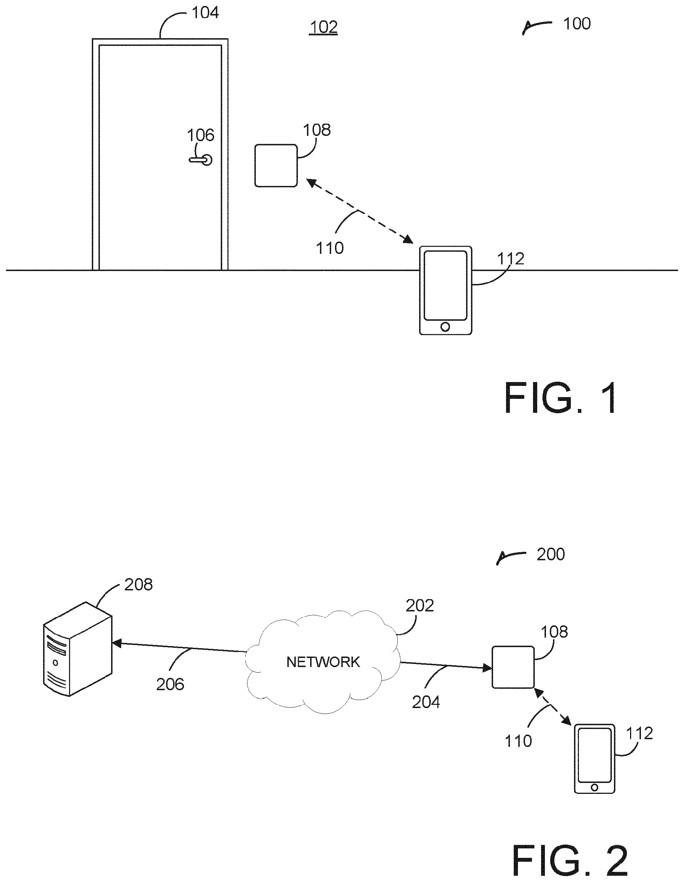

FIG. 1 depicts an example scenario 100 in which a PACS could be used, in accordance with at least one embodiment. As shown in FIG. 1, a wall 102 has disposed therein a door 104. In an example situation, a secured area lies behind the door 104, which has a lockable handle 106 that grants access to the secured area when in an unlocked state and instead prevents access to the secured area when in a locked state.

A reader system 108 is positioned proximate to the handle 106 of the door 104. In an embodiment, the handle 106 has as its default state to be in the locked state. The reader system 108 is operable to selectively place the handle 106 in the unlocked state responsive to being presented with an authorized credential contained in a credential device 112, which can communicate with the reader system 108 via a wireless interface 110. In various different embodiments, the credential device 112 could be or include a keycard, a fob, a mobile device (e.g., a smart phone), and/or any other suitable credential device having the communication capabilities and credentials to carry out embodiments of the present disclosure.

It should be understood that the present disclosure is applicable to numerous types of PACSs being used to secure numerous types of areas and/or other resources, assets, and/or the like. The scenario 100 of FIG. 1 is presented purely by way of example and not limitation.

FIG. 2 depicts an example communication context 200 in which the PACS (including, e.g., the reader system 108) of FIG. 1 could operate, in accordance with at least one embodiment. As shown in FIG. 2, the reader system 108 could be communicatively connected with a network 202 via a communication link 204. Furthermore, a server 208 could be communicatively connected with the network 202 via a communication link 206. In the present disclosure, a communication link could include one or more wireless-communication links and/or one or more wired-communication links, and could include one or more intermediate devices such as access points, network access servers, switches, routers, bridges, and/or the like. Furthermore, the network 202 could be or include a data-communication network such as an Internet Protocol (IP) network and/or one or more communication network of any other type.

The server 208 could perform one or more functions for the reader system 108 such as authorization, authentication, and/or the like. In some embodiments, the reader system 108 performs such functions locally, perhaps as a standalone unit, perhaps involving communication with one or more other devices, systems, servers, and/or the like via a local area network (LAN), for example. The server 208 could include a communication interface, a processor, and data storage containing instructions executable by the processor for carrying out the functions of the server 208.

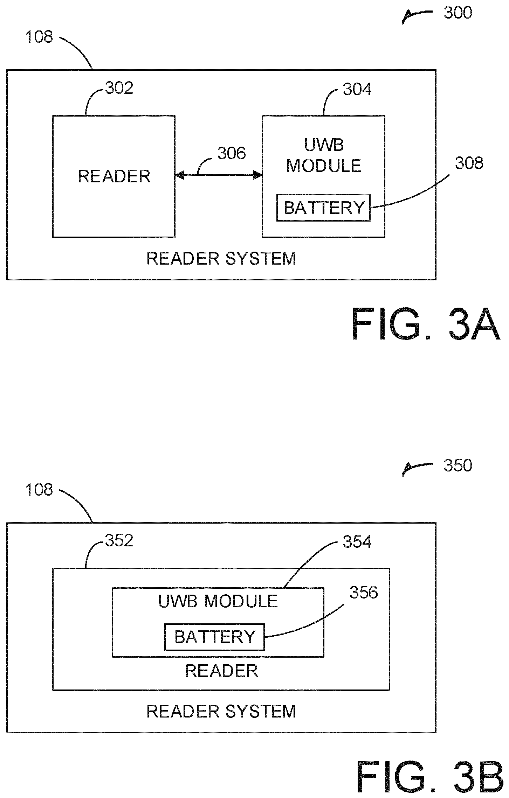

FIG. 3A depicts an example architecture 300 of the reader system 108, in accordance with at least one embodiment. As shown in FIG. 3A, the reader system 108 could include a reader 302 and a UWB module 304 that are communicatively connected with one another via a communication link 306. The communication link 306 may be wired or wireless. In one example, the communication link 306 is a BLE communication link. In some embodiments, the reader 302 is equipped and configured to use wireless communication such as NFC and/or Bluetooth (e.g., Bluetooth Low Energy (BLE)) to carry out communication with credential devices and to selectively place the handle 106 in the unlocked state responsive to being presented with an authorized credential contained in a credential device (e.g., the credential device 112).

The reader 302 could include a wireless-communication interface for communicating according to NFC, BLE, and/or the like, and could also include a wired-communication interface for communicating according to Universal Serial Bus (USB) connections, Ethernet connections, and/or the like. The reader 302 could also include a processor and data storage containing instructions executable by the processor for carrying out the functions of the reader 302.

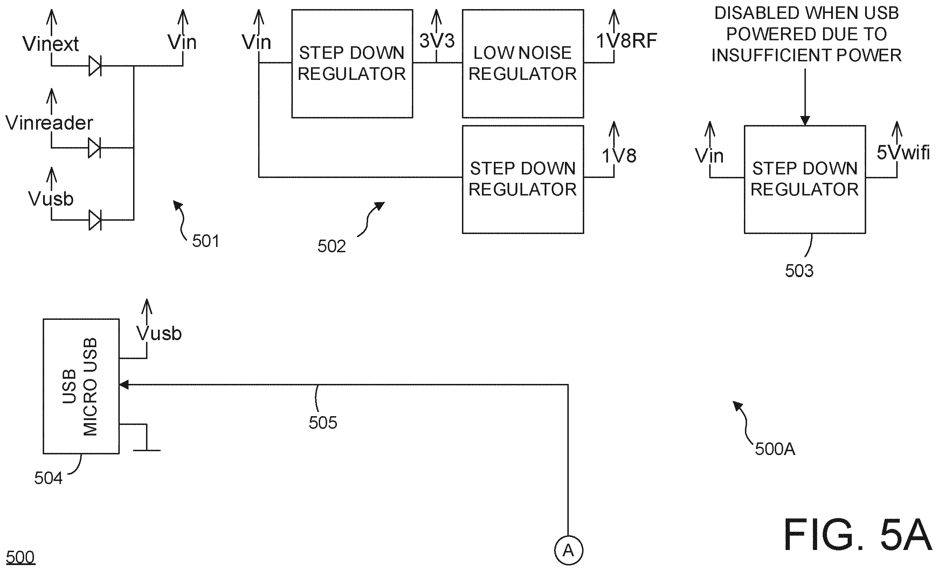

In some embodiments, the reader 302 was installed and in use prior to the UWB module 304 being connected as an add-on module. In other embodiments, the reader 302 and the UWB module 304 are installed together as (or as at least part of) the reader system 108. The UWB module 304 could be connected via the communication link 306 to an existing hardware port (or expansion port, expansion slot, or the like) of the reader 302. In some embodiments, the communication link 306 is or includes a data cable. Further detail regarding an example architecture of the UWB module 304 is provided below in connection with FIG. 5A through FIG. 5G.

In an example, a user carrying a credential device may approach the reader system 108. Upon the credential device coming into a threshold range of the reader system 108, a credential may be exchanged using a low energy wireless protocol, such as Bluetooth Low Energy (BLE), for example. This credential exchange may be coordinated using the reader 302, for example. The reader 302 then establishes a secret, such as a scrambled time stamp (STS), with the credential device to facilitate ranging using UWB communication. UWB ranging is carried out using the UWB module 304. This occurs upon receipt of data from the reader 304, said data including the secret. The data may include the STS, an identifier of the credential such as a PACS ID, and the like. Using the ranging, one or more of the reader 302 or the UWB module 304 may be used to derive an intent of the user in order to identify an intent trigger. Once an intent trigger is identified, the reader 302 may release the credential to allow access to the user.

The UWB module may include a battery 308 or other type of local power source including energy harvesters, capacitors, and the like. The battery 308 may be used to provide power for the UWB module 304 such that it is unnecessary for the UWB module 304 to receive power from the reader system 108, the door lock battery, or any other external power source. This can conserve power for the reader system 108 and may be advantageous as the it may be easier to replace a battery in the removeable UWB module 304 than any other battery in the reader system 108.

FIG. 3B depicts another example architecture 350 of the reader system 108, in accordance with at least one embodiment. As shown in FIG. 3B, the reader system 108 could include a reader 352 that itself could include (e.g., as an on-board module, component, or the like) a UWB module 354 that includes a battery 356. In an embodiment, the UWB module 354 is implemented as an integrated circuit (IC) that is plugged into a board (e.g., a main motherboard) of the reader 352.

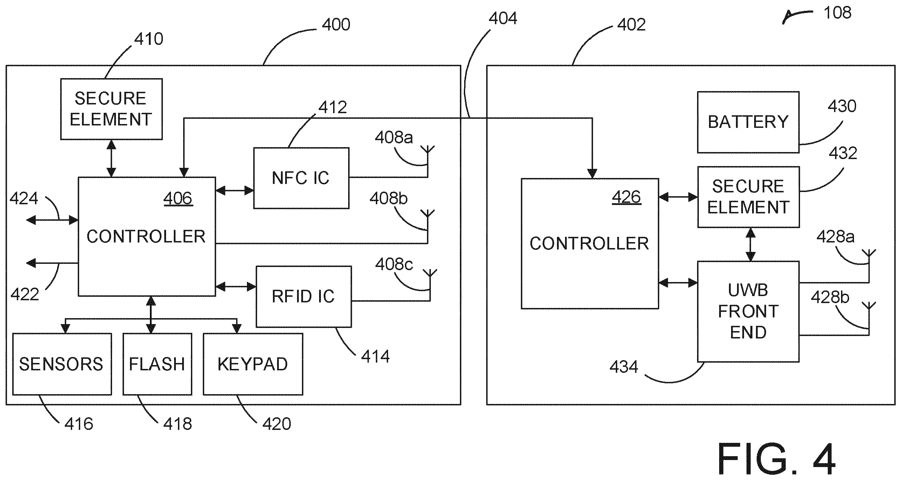

As a general matter, the reader 352 could be similar to the reader 302 of FIG. 3A, and thus is not described here in as great of detail. As with the architecture 300 that is described above in connection with FIG. 3A, in the case of the architecture 350 of FIG. 4, the reader 352 could be a previously installed reader with the UWB module 354 being a later add on, or it could be the case that the reader 352 and the UWB module 354 are associated with a common, concurrent installation as (or as at least part of) the reader system 108.

FIG. 4 depicts another example architecture 400 for the reader system 108. The reader system 108 includes a reader 400 and a UWB module 402 configured to communicate over a communication link 404. The communication link may be wired or wireless. For example, the reader 400 may be configured to communicate with the UWB module 402 using BLE. The reader 400 includes a controller 406, antennas 408a-408c, a secure element 410, an NFC IC 412, an RFID IC 414, sensors 416, flash memory 418, keypad 420, and interfaces 422 and 424. The controller 406 may be a BLE SoC microcontroller, or any other type of control circuit. The controller 406 may be capable of NFC communication through the NFC IC 412 and antenna 408a. The controller may be capable of BLE communication using the antenna 408b, and may be capable of RFID communication through the RFID IC 414 and the antenna 408c. The interfaces 422 and 424 may be a Wiegand interface and an RS485 interface, or any other interface types. The secure element 410 may be configured to cache secure data such as an STS, PACS ID, and the like. The components of the reader 400 may be collected within a first housing.

The UWB module 402 includes a controller 426, antennas 428a and 428b, a battery 430, a secure element 432, and a UWB front end 434. The controller 426 may also be a BLE SoC microcontroller, or any other type of control circuit. The battery 430 may be used to provide power for the UWB module 402 so that the UWB module does not need to be powered by the reader power, lock power, or any other power source. The controller 426 may be capable of UWB communication through the UWB front end 434, which may be any circuit configured to package and receive UWB message for transmission and receipt through the antennas 428a and 428b. The secure element 432 may be configured to cache secure data such as an STS, PACS ID, and the like. The components of the UWB modules 402 may be described in further detail with respect to FIGS. 5A-5G below. The components of the UWB module 402 may be collected within a second housing separate from the reader 400.

In an example, a user carrying a credential device may approach the reader 400. Upon the credential device coming into a threshold range of the reader system 108, the controller 406 may exchange a credential with the credential device using BLE through the antenna 408b. The controller 406 then establishes a secret, such as a scrambled time stamp (STS), with the credential device to facilitate ranging using UWB communication. UWB ranging is carried out by the controller 426 of the UWB module 402. This occurs upon receipt of data from the controller 406, said data including the secret. The data may include the STS, an identifier of the credential such as a PACS ID, and the like. Using the ranging, one or more of the controllers 406 and 426 may be used to derive an intent of the user in order to identify an intent trigger (such as moving to a specific position). Once an intent trigger is identified, the controller 406 may release the credential to allow access to the user.

FIG. 5A through FIG. 5G collectively depict an example UWB-module architecture 500 of a UWB module (e.g., the UWB module 304 of FIG. 3A, the UWB module 354 of FIG. 3B of FIG. 3B, the UWB module 402 of FIG. 4, and/or the like), in accordance with at least one embodiment. In an embodiment, the UWB-module architecture 500 is implemented as one or more circuit boards on which one or more of the recited components reside. In other embodiments, distributed architectures can be used. Furthermore, it is noted that a number of specific components, connections, and the like are presented in a specific arrangement in the architecture 500 that is depicted and described in connection with FIG. 5A through FIG. 5G. It should be understood that this is by way of example and not limitation. Various different input voltages, crystal oscillators, connectors, integrated circuits, and/or the like could be used in different embodiments. Various components related to debugging could be omitted from some embodiments.

FIG. 5A depicts a first portion 500A of the example UWB-module architecture 500, in accordance with at least one embodiment. The first portion 500A includes a voltage arrangement 501 that includes voltages Vᵢₙₑₓₜ, Vᵢₙ, V_{inreader}, and V_{usb}. Also included is a voltage-regulator arrangement 502, which includes a first step down regulator (4-17V to 3V3), a low noise regulator (3V3 to 1V8), and a second step down regulator (4-17V to 1V8). The first step down regulator is connected to Vᵢₙ and the second step down regulator at a first connection, and to input voltage 3V3 at a second connection. The low noise regulator is connected between input voltage 3V3 and 1V8_{RF}. The second step down regulator is connected between Vᵢₙ and 1V8. The first step down regulator and the second step down regulator could each be an LT^{®}8607 manufactured by Analog Devices^{®}, which is headquartered in Norwood, Massachusetts. The low noise regulator could be an LT^{®}3045 from Analog Devices ^{®}.

Also included is a third step down regulator (6-17V to 5V) that is connected between Vᵢₙ and 5V_{wi-fi}. The third step down regulator can be disabled when USB powered due to insufficient power. The third step down regulator could be an LT^{®}8607 from Analog Devices^{®}, and in at least one embodiment is only activated if the UWB module is supplied via an external power supply.

As a general matter, the UWB module can be powered through an external supply voltage or USB, as examples. In some instances, in which USB is used as the power source, the onboard 5V regulation (i.e., the third step down regulator, used for an external Wi-fi module in some embodiments) is deactivated, as the current consumption would potentially exceed the USB specification. Thus, in at least some embodiments, use of a Wi-fi extension module or any other 5V-supplied extension board would warrant use of an external power supply.

The first portion 500A further includes a Micro USB element 504 that is connected to input voltage Vusb and to ground, and that is further connected to a data link 505. In an embodiment, Wi-fi functionality is not powered by USB, and USB only powers BLE and UWB circuits.

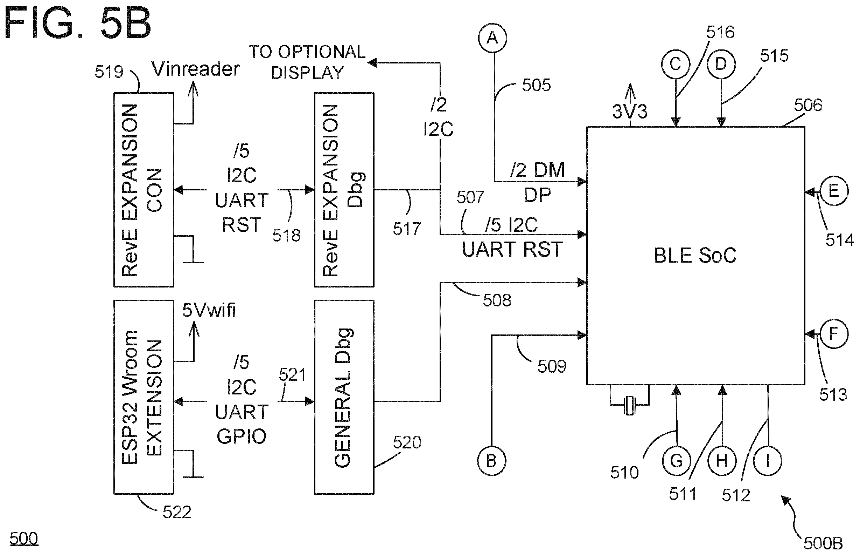

FIG. 5B depicts a second portion 500B of the example UWB-module architecture 500, in accordance with at least one embodiment. In the depicted embodiment, the second portion 500B includes a BLE system on chip (SoC) 506, a RevE expansion debug pinheader 517, a RevE expansion connector 519, a general debug pinheader 520, and an ESP32 WROOM extension connector 522. In an embodiment, RevE refers to a hardware revision of a reader such as an iCLASS SE reader manufactured by HID^{®} Global Corporation, which is headquartered in Austin, Texas.

The ESP32 WROOM extension connector 522 could provide a connection option to an ESP32 module designed for Wi-fi connectivity, and could be configured to operate at up to a 500 mA current requirement at 5V, as an example. An ESP32 WROOM extension module could provide Wi-fi capability to a RevE reader, making that reader a transparent reader over Wi-fi, and could include an ESP32 WROOM module and an adapter board to a RevE extension connector (e.g., a Hirose connector). A programming adapter (e.g., VCOM via FTDI to Hirose connector) could make loading firmware easier. The Wi-fi module could be plugged into this programming adapter.

The BLE SoC 506 could be the NRF52840, manufactured by Nordic Semiconductor^{®}, which is headquartered in Trondheim, Norway. In an embodiment, the BLE SoC 506 includes at least one onboard antenna. In at least one embodiment, the BLE SoC 506 is the core microcontroller for the UWB module having the example architecture 500. In some embodiments, both the reader and the UWB module (a.k.a. platform) use a Nordic NRF52840 as their respective core microcontroller. In embodiments of the UWB module of the present disclosure, a Nordic NRF52840 serves not only as the core controller of the UWB module, but also as the BLE interface used to set up secure UWB ranging sessions. An example pin/peripheral assignment for the NRF52840 for use as the BLE SoC 506 in at least one assignment is shown in Table 1 at the end of this detailed description.

The BLE SoC 506 is connected to both input voltage 3V3 and a 32 MHz crystal oscillator, and is also connected to the data link 505, as well as to a data link 507, a data link 508, a data link 509, a data link 510, a data link 511, a data link 512, a data link 513, a data link 514, a data link 515, and a data link 516. The data link 507 is connected to both an optional display and to the RevE expansion debug pinheader 517, which in turn is connected via a data link 518 to the RevE expansion connector 519. The UWB module can be powered via the RevE expansion connector 519 in embodiments in which the UWB module is used as an add-on module to a reader. In some instances, the UWB module is powered via a dedicated power connector. The data link 508 is connected to the general debug pinheader 520, which in turn is connected via a data link 521 to the ESP32 Wroom extension connector 522. The RevE expansion connector 519 is connected to both input voltage V_{inreader} and to ground, whereas the ESP32 Wroom extension connector 522 is connected to both input voltage 5V_{wi-fi} and to ground.

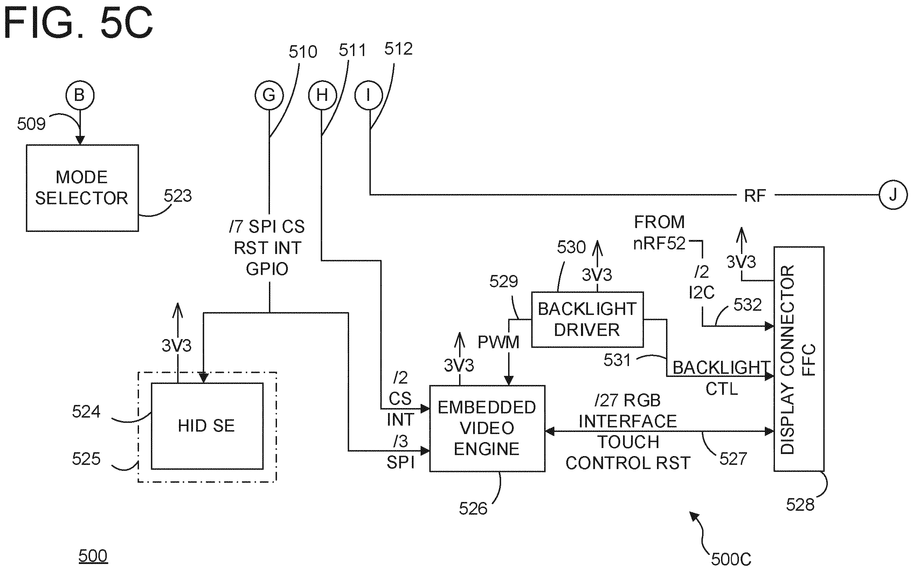

FIG. 5C depicts a third portion 500C of the example UWB-module architecture 500, in accordance with at least one embodiment. In the depicted embodiment, the third portion 500C includes a mode selector 523, which could be or include a low profile DIP switch, and could be or include a double switch that allows developers to identify and/or define a number (e.g., 4) different operation modes of the UWB module having the example UWB-module architecture 500. The different operation modes could include a RevE extension mode, a standalone mode, a Wi-fi mode, and a debug mode, as examples. The mode selector 523 is connected to the data link 509. The mode selector 523 may allow a single firmware image to be developed for these and other multiple operation modes. In an embodiment, the mode selector 523 is a CVS-02TB manufactured by NIDEC^{®} Copal Electronics of Torrance, California.

In the depicted embodiment, the third portion 500C also includes a secure element 524, an embedded video engine 526, a backlight driver 530, and a display connector 528. As indicated by a board/printed circuit board (PCB) boundary 525, the secure element 524 could be or could reside on a PCB that is separate from a main board of the UWB-module architecture 500. The data link 510 is connected to both the secure element 524 and the embedded video engine 526. The secure element 524 could be or include a secure access module (SAM). In an embodiment, the secure element 524 is an ST33 ARM SC300 secure microcontroller manufactured by STMicroelectronics^{®}, which is headquartered in Geneva, Switzerland.

The embedded video engine 526 could be an FT811 embedded video engine (EVE) manufactured by Future Technology Devices International^{®} Limited, which is headquartered in Glasgow, Scotland in the United Kingdom. In at least one embodiment, the presence of the embedded video engine 526 on the board helps to unload the main microcontroller (i.e., the BLE SoC 506). The embedded video engine 526 could be wired to drive an external display in RGB mode, and to control the backlight driver 530. The embedded video engine 526 is connected to input voltage 3V3, and also by a data link 529 to the backlight driver 530 and by a data link 527 to the display controller 528. The backlight driver 530 is connected to the display controller 528 by a data link 531. In the depicted embodiment, the backlight driver 530 is the FAN5333, a dedicated LED controller that is manufactured by Fairchild Semiconductor^{®}, a subsidiary of ON Semiconductor^{®}, which is headquartered in Phoenix Arizona. In an embodiment, the backlight driver 530 is used to control a display backlight. A shutdown pin of the backlight driver 530 is controlled in an embodiment by the embedded video engine 526 via a pulse width modulation (PWM), to allow for dimming.

The display connector 528 is further connected to input voltage 3V3, and with the BLE SoC 506 via a data link 532. The display connector 528 could be compatible with the Displaytech^{®} DT024CTFT and DT024CTFT-TS displays, the latter of which supports touch control. These are examples of external thin-film-transistor (TFT) displays that the presently disclosed UWB-module architecture is designed to support, though other displays may be used instead. The display connector 528 could be a dedicated flat flex connector (FFC). In an embodiment, the supported display is 2.4" in size with 320x240 pixel resolution. A supported display could use an ILI9341 controller form ILI Technology^{®} Corporation of Taiwan.

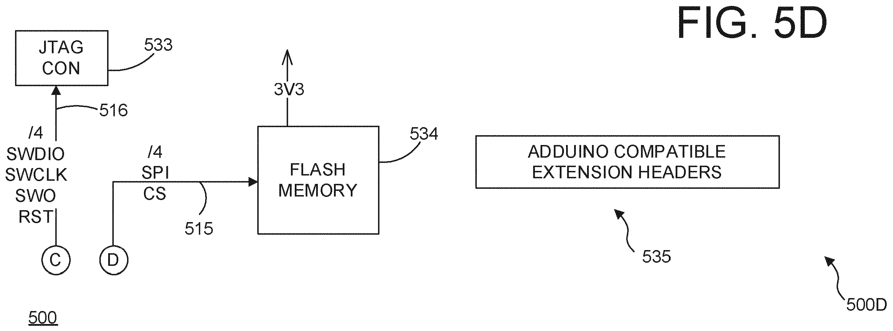

FIG. 5D depicts a fourth portion 500D of the example UWB-module architecture 500, in accordance with at least one embodiment. In the depicted embodiment, the fourth portion 500D includes a group of Arduino compatible extension headers 535, and also includes a Joint Test Action Group (JTAG) connector 533 that is connected to the data link 516, and a flash memory 534 that is connected to the data link 515 and also to input voltage 3V3. In an embodiment, the flash memory 534 could be an MX25L flash memory module manufactured by Macronix^{®} International Co., Ltd. headquartered in Taiwan. In an embodiment, the particular part used is the MX25L1606EXCI-12G. The flash memory 534 could be used for storage of firmware images or other data. The capacity of the flash memory 534 could be 2 MB as an example. In an embodiment, a similar flash memory module is used in the reader to which the present UWB module is operably connected. The flash memory 534 and/or the flash memory module in the reader could be connected to a Queued Serial Peripheral Interface (QSPI) to enable flash access while still maintaining use of a general secure peripheral interface (SPI) interface.

The JTAG connector 533 could be the FTSH-105-01-F-DV-K, manufactured by Samtec^{®}, Inc., headquartered in New Albany, Indiana. The JTAG connector 533 could be configured to operate in Serial Wire (SW) mode, which is an operating mode for the JTAG port where only two pins, TCLK and TMS, are used for the communication. A third pin can be used optionally to trace data. JTAG pins and SW pins are shared. In an embodiment, with respect to the pins of the JTAG connector 533, TCLK is SWCLK (Serial Wire Clock), TMS is SWDIO (Serial Wire debug Data Input/Output), TDO is SWO (Serial Wire trace Output), and TDI is NC. Multiple JTAG connectors could be used on the board of the UWB module having the example architecture 500 that is described herein.

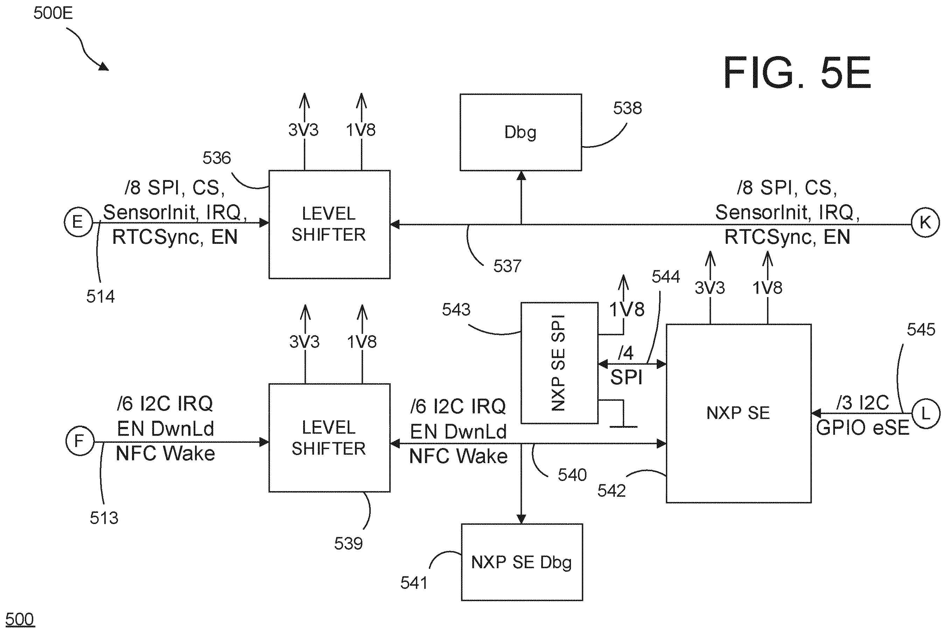

FIG. 5E depicts a fifth portion 500E of the example UWB-module architecture 500, in accordance with at least one embodiment. In the depicted embodiment, the fifth portion 500E includes a first level shifter 536, a second level shifter 539, a UWB integrated circuit chip debug pinheader 538, a secure element (SE) SPI pinheader 543, an SE debug pinheader 541, and an SE 542.

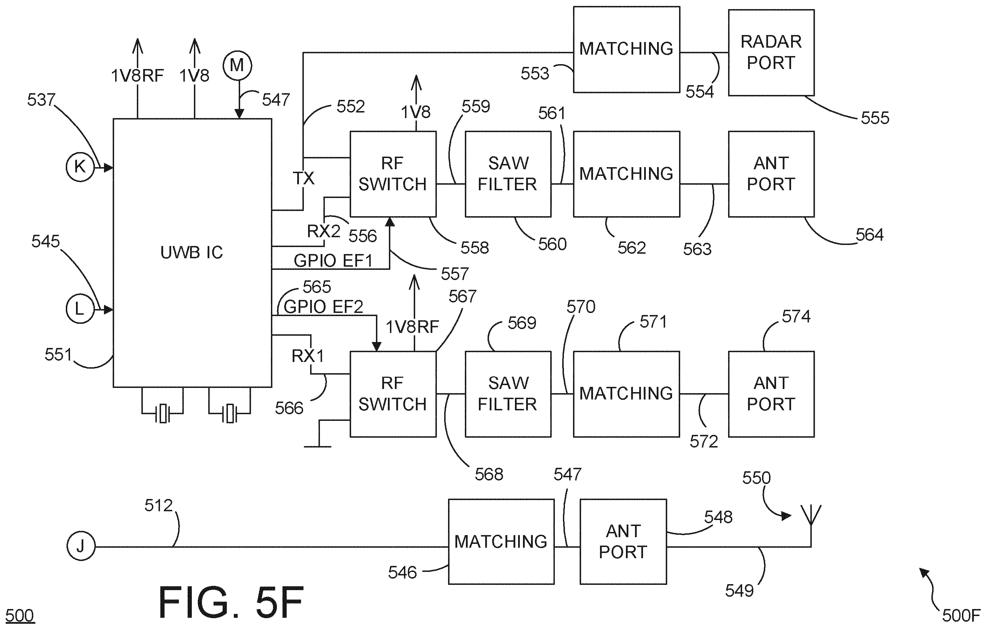

The first level shifter 536 could be a TXB0108 8-bit bidirectional voltage-level translator manufactured by Texas Instruments^{®} Incorporated, which is headquartered in Dallas, Texas. The TXB0108 is used in at least one embodiment for general purpose I/O and SPI communication. In an embodiment, a core reset signal of the TXB0108 is used to control an output enable of the first level shifter 536. This allows for both the SE 542 and the below-described UWB IC 551 of FIG. 5F to be connected to an external circuit if the core reset line is pulled low, which can be done via the BLE SoC EX06 or via a pin header, as examples. The first level shifter 536 is connected to the data link 514 and to a data link 537, which is in turn connected to the debug connector 538. In an embodiment, the data link 537 includes an SPI bus that uses unified configuration interface (UCI) commands for unsecure ranging and UWB IC configuration.

The second level shifter 539 could include both a TXB0108 8-bit bidirectional voltage-level translator as well as a PCA9306DCUR bidirectional voltage-level translator also manufactured by Texas Instruments^{®} Incorporated. The PCA9306DCUR is a dedicated 2-bit bidirectional I₂C level shifter. In an embodiment, the PCA9306DCUR is used for the I₂C interface to the SE 542. The second level shifter 539 is connected to the data link 513 and also to a data link 540, which is in turn connected to both the NXP SE debug connector 541 and the NXP secure element (SE) 542. In an embodiment, the NXP SE debug connector 541 is usable for external device connection to update an NXP applet (e.g., Secure Element Management Service (SEMS) agent).

In an embodiment, the first level shifter 536 and the second level shifter 539 are used because the below-described UWB IC 551 of FIG. 5F is designed for a mobile device and as such has only limited supply voltage support, in particular only for 1.8V. Due to that, the interfaces to the UWB IC 551 in the present disclosure undergo voltage-level shifting. In an alternative approach, a host controller that operates at 1.8V could be used, or the I/O voltage of the host processor could be supplied with 1.8V. An advantage of the depicted architecture is that it makes it easier to interface with external devices. Also, the cross-switch capability of the BLE SoC 506 (in embodiments using the nRF52840) leads to flexible peripheral assignments on any of the external interfaces, making it less advantageous to use level shifters for those pins.

The SE 542 is connected via a data link 544 to the SE SPI pinheader 543, which itself is also connected to input voltage 1V8 and to ground. In addition to being connected to the SE SPI pinheader 543 via the data link 544 and to both the second level shifter 539 and the NXP SE debug connector 541 via the data link 540, the SE 542 is also connected to input voltage 3V3, input voltage 1V8, and a data link 545. In an embodiment, the SE 542 supports secure ranging. The SE 542 could be a Java Card SE with an NFC front end. In at least one embodiment, the SE 542 is the SN110U, which is a single chip secure element and NFC controller manufactured by NXP Semiconductors^{®} N.V., which is headquartered in Eindhoven, Netherlands. In an embodiment, the NFC controller is designed for integration in mobile devices compliant with NFC Forum, EMVCo and ETSI/SWP.

FIG. 5F depicts a sixth portion 500F of the example UWB-module architecture 500, in accordance with at least one embodiment. In the depicted embodiment, the sixth portion 500F includes the above-mentioned UWB IC 551, as well as a first matching circuit 553, a radar port 555, a first RF switch 558, a first surface acoustic wave (SAW) bandpass filter 560, a second matching circuit 562, a first antenna port 564, a second RF switch 567, a second SAW bandpass filter 569, a third matching circuit 571, a second antenna port 574, a fourth matching circuit 546, a third antenna port 548, and a BLE antenna 550.

In at least one embodiment, the UWB 551 can be an SR100T, which is a secure fine ranging chipset that, like the SN110U that can be used as the SE 542, is manufactured by NXP Semiconductors^{®} N.V. In an embodiment, the SR100T is a fully integrated single chip Impulse Radio Ultra-Wideband (IR-UWB) low-energy transceiver IC, compliant with IEEE 802.15.4 HRP UWB PHY. It is designed for secure ranging applications in a mobile environment. It supports super high frequency (SHF) UWB bands from 6.0 GHz to 8.5 GHz for worldwide use. It has a programmable transmitter output power of up to 12dBm, as well as a fully coherent receiver for maximum range and accuracy. It integrates all relevant RF components (e.g., matching network, balun), and it complies with FCC & ETSI UWB spectral masks. It uses a supply voltage of 1.8V +/-7%.

The SR100T also supports angle of arrival (AoA) measurement, and has integrated I/Q phase and amplitude mismatch compensation. Its form factor is a 3.8 mm x 3.1 mm 68-pin Wafer Level Chip Scale Package (WLCSP) package with 0.35 mm pitch. It includes an ARM^{®} Cortex-M33 32 Bit processor having 128 kB code RAM, 128 kB data RAM, 64 kB ROM, and ARM^{®} TrustZone technology and S-DMA for security. The SR100T further has a BSP32 CoolFlux SubSystem having a 200 MHz clock, 32kB code RAM, and 2x16kB data RAM. The SR100T also has a hardwired DSP for the first receive data link 566, the second received data link 556, and the transmission data link 552; operating frequencies of 250 MHz, 500 MHz, and 1000 MHz; 2x4kB RAM for channel estimators, and 4x32kB RAM for RF data log.

As depicted in FIG. 5F, the UWB 551 is connected to input voltage 1V8_{RF}, input voltage 1V8, a first crystal oscillator (37.768 kHz), a second crystal oscillator (38.4 MHz), the data link 537, the data link 545, a data link 547, a transmission data link 552, a first receive data link 566, a second receive data link 556, a data link 557, and a data link 565.

The UWB IC 551 can be considered to be connected to two RF pipelines: a first RF pipeline and a second RF pipeline. The first RF pipeline includes the first RF switch 558, the first SAW bandpass filter 560, the second matching circuit 562, and the first antenna port 564. The second RF pipeline includes the second RF switch 567, the second SAW bandpass filter 569, the third matching circuit 571, and the second antenna port 574.

In the depicted embodiment, the UWB IC 551 is connected to the first matching circuit 553 via the transmission data link 552, which also connects the UWB IC 551 with the first RF switch 558. The first matching circuit 553 in turn is connected via a data link 554 to the radar port 555, which corresponds to a radar interface that can be used in connection with various embodiments. UWB can be used in radar operations, providing localization accuracies on the scale of tens of centimeters. Due to the possibly variable absorption and reflection of different frequencies in a pulse, both surface and obstructed (e.g., covered) features of an object can be detected. In some cases, the localization provides an angle of incidence in addition to distance.

As stated, in the first RF pipeline, the UWB IC 551 is connected via the transmission data link 552 to the first RF switch 558. The UWB IC 551 is also connected to the first RF switch 558 via the second receive data link 556 and the data link 557. The first RF switch 558, which is further connected to input voltage 1 V8_{RF}, could be an XMSSJR6G0BA, which is manufactured by Murata^{®} Manufacturing Company, Ltd., which is headquartered in Kyoto, Japan. The first RF switch 558 is in turn connected via a data link 559 to the first SAW bandpass filter 560, which is in turn connected via a data link 561 to the second matching circuit 562. The second matching circuit 562 is in turn connected via a data link 563 to the first antenna port 563, which in at least one embodiment is in turn connected to a first external UWB antenna.

In the second RF pipeline, the UWB IC 551 is connected to the second RF switch 567 via the data link 565 and also via the first receive data link 566. The UWB IC 551 is also connected to input voltage 1 V8_{RF} and to ground. The second RF switch could also be an XMSSJR6G0BA. The second RF switch 567 is in turn connected via a data link 568 to the second SAW bandpass filter 569, which is in turn connected via a data link 570 to the third matching circuit 571. The third matching circuit 571 is in turn connected via a data link 572 to the second antenna port 574, which in at least one embodiment is in turn connected to a second external UWB antenna.

Any suitable number of external UWB antennas can be used in various different embodiments. In embodiments in which a third external UWB antenna is deployed in connection with the presently disclosed example architecture 500, a third RF pipeline is deployed to connect to the third externa UWB antenna. Moreover, a switch can be implemented to facilitate switching between antennas for different communication packets.

Further depicted in FIG. 5F is the fourth matching circuit 546 connected between the data link 512 and a data link 547, which further connects to the third antenna port 548. The third antenna port 548 provides optional connectivity to an external BLE antenna. In the depicted embodiment, the third antenna port 548 is connected via a data link 549 with the BLE antenna 550, which could be a 2.4 GHz BLE antenna.

In at least one embodiment, for its RF interfaces, the UWB module of the present disclosure utilizes U.FL connectors manufactured by Hirose^{®} Electric Group, which is headquartered in Tokyo, Japan. These RF interfaces include the radar port 555 that can be connected to a radar antenna, the first antenna port 564 that can be connected to a first external UWB antenna, the second antenna port 574 that can be connected to a second external UWB antenna, and the third antenna port 548 that can be connected to the (external) BLE antenna 550. U.FL connectors are miniature RF coaxial connectors for high frequency signals, commonly used in applications where space is limited. They are often used in laptop mini PCI cards as well as mobile phones. Cables are manufactured by Hirose^{®} can also be used. In some embodiments, Hirose X.FL connectors are used. Among other differences, X.FL connectors are rated for use at higher frequencies than are U.FL connectors.

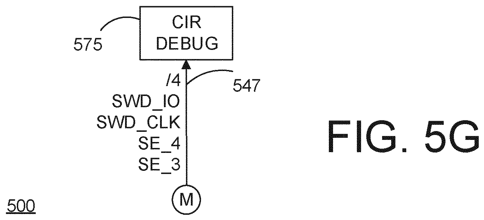

FIG. 5G depicts a seventh portion of the example UWB-module architecture 500, in accordance with at least one embodiment. In the depicted embodiment, the seventh portion includes a channel impulse response (CIR) debug connector 575, which is connected to the data link 547. In some embodiments, the CIR debug connector 575 is used in connection with pins-of the above-described UWB IC 551 of FIG. 5F-that are used for SPI communication in order to access CIR data that the UWB IC 551 obtains. This CIR data can be used for analog debugging (e.g., analog performance debugging, null estimations, and/or the like) of ranging applications. The CIR is used to find the actual first path, i.e., the actual distance between two UWB devices (e.g., the UWB module 304 and the credential device 112). It is further noted that the maximum detectable delta between first path and strongest path is known as the dynamic range. As such, the actual first path represents an important debugging parameter in connection with ranging applications.

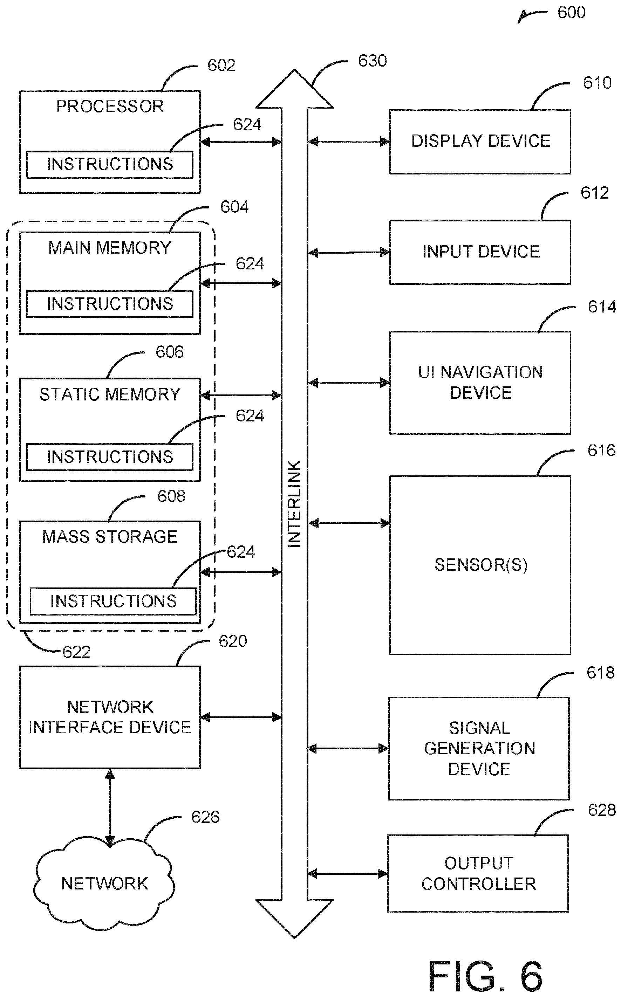

FIG. 6 illustrates a block diagram of an example machine 600 upon which any one or more of the techniques (e.g., methodologies) discussed herein can perform. Examples, as described herein, can include, or can operate by, logic or a number of components, or mechanisms in the machine 600. Circuitry (e.g., processing circuitry) is a collection of circuits implemented in tangible entities of the machine 600 that include hardware (e.g., simple circuits, gates, logic, etc.). Circuitry membership can be flexible over time. Circuitries include members that can, alone or in combination, perform specified operations when operating. In some examples, hardware of the circuitry can be immutably designed to carry out a specific operation (e.g., hardwired). In some examples, the hardware of the circuitry can include variably connected physical components (e.g., execution units, transistors, simple circuits, etc.) including a machine readable medium physically modified (e.g., magnetically, electrically, moveable placement of invariant massed particles, etc.) to encode instructions of the specific operation. In connecting the physical components, the underlying electrical properties of a hardware constituent are changed, for example, from an insulator to a conductor or vice versa. The instructions enable embedded hardware (e.g., the execution units or a loading mechanism) to create members of the circuitry in hardware via the variable connections to carry out portions of the specific operation when in operation. Accordingly, in some examples, the machine readable medium elements are part of the circuitry or are communicatively coupled to the other components of the circuitry when the device is operating. In some examples, any of the physical components can be used in more than one member of more than one circuitry. For example, under operation, execution units can be used in a first circuit of a first circuitry at one point in time and reused by a second circuit in the first circuitry, or by a third circuit in a second circuitry at a different time. Additional examples of these components with respect to the machine 600 follow.

In some embodiments, the machine 600 can operate as a standalone device or can be connected (e.g., networked) to other machines. In a networked deployment, the machine 600 can operate in the capacity of a server machine, a client machine, or both in server-client network environments. In some examples, the machine 600 can act as a peer machine in peer-to-peer (P2P) (or other distributed) network environment. The machine 600 can be a personal computer (PC), a tablet PC, a set-top box (STB), a personal digital assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

The machine (e.g., computer system) 600 can include a hardware processor 602 (e.g., a central processing unit (CPU), a graphics processing unit (GPU), a hardware processor core, or any combination thereof), a main memory 604, a static memory (e.g., memory or storage for firmware, microcode, a basic-input-output (BIOS), unified extensible firmware interface (UEFI), etc.) 606, and mass storage 608 (e.g., hard drives, tape drives, flash storage, or other block devices) some or all of which can communicate with each other via an interlink (e.g., bus) 630. The machine 600 can further include a display unit 610, an alphanumeric input device 612 (e.g., a keyboard), and a user interface (UI) navigation device 614 (e.g., a mouse). In some examples, the display unit 610, input device 612 and UI navigation device 614 can be a touch screen display. The machine 600 can additionally include a storage device (e.g., drive unit) 608, a signal generation device 618 (e.g., a speaker), a network interface device 620, and one or more sensors 616, such as a global positioning system (GPS) sensor, compass, accelerometer, or other sensor. The machine 600 can include an output controller 628, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

Registers of the processor 602, the main memory 604, the static memory 606, or the mass storage 608 can be, or include, a machine readable medium 622 on which is stored one or more sets of data structures or instructions 624 (e.g., software) embodying or utilized by any one or more of the techniques or functions described herein. The instructions 624 can also reside, completely or at least partially, within any of registers of the processor 602, the main memory 604, the static memory 606, or the mass storage 608 during execution thereof by the machine 600. In some examples, one or any combination of the hardware processor 602, the main memory 604, the static memory 606, or the mass storage 608 can constitute the machine readable media 622. While the machine readable medium 622 is illustrated as a single medium, the term "machine readable medium" can include a single medium or multiple media (e.g., a centralized or distributed database, and/or associated caches and servers) configured to store the one or more instructions 624.

The term "machine readable medium" can include any medium that is capable of storing, encoding, or carrying instructions for execution by the machine 600 and that cause the machine 600 to perform any one or more of the techniques of the present disclosure, or that is capable of storing, encoding or carrying data structures used by or associated with such instructions. Non-limiting machine readable medium examples can include solid-state memories, optical media, magnetic media, and signals (e.g., radio frequency signals, other photon based signals, sound signals, etc.). In some examples, a non-transitory machine readable medium comprises a machine readable medium with a plurality of particles having invariant (e.g., rest) mass, and thus are compositions of matter. Accordingly, non-transitory machine-readable media are machine readable media that do not include transitory propagating signals. Specific examples of non-transitory machine readable media can include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

In some examples, information stored or otherwise provided on the machine readable medium 622 can be representative of the instructions 624, such as instructions 624 themselves or a format from which the instructions 624 can be derived. This format from which the instructions 624 can be derived can include source code, encoded instructions (e.g., in compressed or encrypted form), packaged instructions (e.g., split into multiple packages), or the like. The information representative of the instructions 624 in the machine readable medium 622 can be processed by processing circuitry into the instructions to implement any of the operations discussed herein. For example, deriving the instructions 624 from the information (e.g., processing by the processing circuitry) can include: compiling (e.g., from source code, object code, etc.), interpreting, loading, organizing (e.g., dynamically or statically linking), encoding, decoding, encrypting, unencrypting, packaging, unpackaging, or otherwise manipulating the information into the instructions 624.

In some examples, the derivation of the instructions 624 can include assembly, compilation, or interpretation of the information (e.g., by the processing circuitry) to create the instructions 624 from some intermediate or preprocessed format provided by the machine readable medium 622. The information, when provided in multiple parts, can be combined, unpacked, and modified to create the instructions 624. For example, the information can be in multiple compressed source code packages (or object code, or binary executable code, etc.) on one or several remote servers. The source code packages can be encrypted when in transit over a network and decrypted, uncompressed, assembled (e.g., linked) if necessary, and compiled or interpreted (e.g., into a library, stand-alone executable etc.) at a local machine, and executed by the local machine.

The instructions 624 can be further transmitted or received over a communications network 626 using a transmission medium via the network interface device 620 utilizing any one of a number of transfer protocols (e.g., frame relay, internet protocol (IP), transmission control protocol (TCP), user datagram protocol (UDP), hypertext transfer protocol (HTTP), etc.). Example communication networks can include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, peer-to-peer (P2P) networks, among others. In some examples, the network interface device 620 can include one or more physical jacks (e.g., Ethernet, coaxial, or phone jacks) or one or more antennas to connect to the communications network 626. In some examples, the network interface device 620 can include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 600, and includes digital or analog communications signals or other intangible medium to facilitate communication of such software. A transmission medium is a machine readable medium.

The above description includes references to the accompanying drawings, which form a part of the detailed description. The drawings show, by way of illustration, specific embodiments in which the invention can be practiced. These embodiments are also referred to herein as "examples."

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The above description is intended to be illustrative, and not restrictive. The Abstract is provided to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Thus, the following claims are hereby incorporated into the Detailed Description as examples or embodiments. The scope of the invention should be determined with reference to the appended claims.

## Claims

1. A reader system (108) for a physical access control system, the reader system (108) comprising:
- first and second antennas (408a; 428a);
- a first controller (406) configured to communicate with a credential device using a low power communication protocol via the first antenna (408a) to exchange a credential with the credential device, wherein the first controller is further configured to establish a secret with the credential device to facilitate UWB ranging; and
- a second controller (426) configured to communicate with the credential device using ultra-wide band (UWB) via the second antenna (428a) to perform UWB ranging for the credential device, wherein the second controller (426) is configured to communicate with the first controller (406) via a communication link (404) and performs the UWB ranging for the credential device upon receipt of data from the first controller (406), the data including at least the secret.

2. The reader system (108) of claim 1, wherein the communication link is a wireless communication link (404).

3. The reader system of claim 2, wherein the first controller (406) is configured to communicate with the second controller (426) over the wireless communication link (404) using the low power communication protocol.

4. The reader system (108) of any preceding claim, wherein the low power communication protocol is Bluetooth Low Energy.

5. The reader system (108) of any preceding claim, further comprising:
a first housing, wherein the first controller (406) is positioned within the first housing;
and
a second housing separate from the first housing, wherein the second controller (426) is positioned within the second housing.

6. The reader system (108) of claim 5, further comprising a battery (430) positioned within the second housing and configured to provide power to the second controller (426).

7. The reader system (108) of any preceding claim, further comprising:
first and second secure elements (410, 432), wherein the first secure element (410) is connected to securely cache data for the first controller (406) and the second secure element (432) is connected to securely cache data for the second controller (426).

8. The reader system (108) of any preceding claim, wherein the reader system (108) further comprises a UWB front end circuit (434) connected between the second controller (426) and the second antenna (428a) to facilitate communication via UWB.

9. The reader system (108) of claim 8, further comprising a further antenna (428b) connected to the UWB front end circuit (434) to further facilitate communication via UWB.

10. The reader system (108) of any preceding claim, further comprising third and fourth antennas (408b, 408c), wherein the first controller (406) is configured to communicate using radio frequency identification via the third antenna (408c) and communicate using near field communication via the fourth antenna (408b).

11. The reader system (108) of any preceding claim, further comprising:
a reader circuit comprising:
the first antenna (408a); and
the first controller(406) ; and
an ultra-wide band (UWB) circuit comprising:
the second antenna (428a), wherein the second antenna (428a) is a UWB antenna; and
the second controller (426).

## Patentansprüche

1. Lesersystem (108) für ein physisches Zugangskontrollsystem, wobei das Lesersystem (108) aufweist:
- eine erste und eine zweite Antenne (408a; 428a);
- eine erste Steuerung (406), die dazu ausgebildet ist, mit einer Berechtigungsvorrichtung unter Verwendung eines energiearmen Kommunikationsprotokolls über die erste Antenne (408a) zum Austausch einer Berechtigung mit der Berechtigungsvorrichtung zu kommunizieren, wobei die erste Steuerung ferner dazu ausgebildet ist, ein Geheimnis mit der Berechtigungsvorrichtung zur Ermöglichung einer UWB-Entfernungsmessung festzulegen; und
- eine zweite Steuerung (426), die dazu ausgebildet ist, mit der Berechtigungsvorrichtung unter Verwendung von Ultrabreitband (UWB) über die zweite Antenne (428a) zur Durchführung einer UWB-Entfernungsmessung für die Berechtigungsvorrichtung zu kommunizieren, wobei die zweite Steuerung (426) dazu ausgebildet ist, mit der ersten Steuerung (406) über eine Kommunikationsverbindung (404) zu kommunizieren, und die UWB-Entfernungsmessung für die Berechtigungsvorrichtung bei Empfang von Daten von der ersten Steuerung (406) durchführt, wobei die Daten zumindest das Geheimnis aufweisen.

2. Lesersystem (108) nach Anspruch 1, wobei die Kommunikationsverbindung eine drahtlose Kommunikationsverbindung (404) ist.

3. Lesersystem nach Anspruch 2, wobei die erste Steuerung (406) dazu ausgebildet ist, mit der zweiten Steuerung (426) über die drahtlose Kommunikationsverbindung (404) unter Verwendung des energiearmen Kommunikationsprotokolls zu kommunizieren.

4. Lesersystem (108) nach einem der vorhergehenden Ansprüche, wobei das energiearme Kommunikationsprotokoll Bluetooth Low Energy ist.

5. Lesersystem (108) nach einem der vorhergehenden Ansprüche, das ferner aufweist:
ein erstes Gehäuse, wobei die erste Steuerung (406) innerhalb des ersten Gehäuses angeordnet ist; und
ein zweites Gehäuse, das von dem ersten Gehäuse getrennt ist, wobei die zweite Steuerung (426) innerhalb des zweiten Gehäuses angeordnet ist.

6. Lesersystem (108) nach Anspruch 5, das ferner eine Batterie (430), die innerhalb des zweiten Gehäuses angeordnet und dazu ausgebildet ist, der zweiten Steuerung (426) Energie bereitzustellen, aufweist.

7. Lesersystem (108) nach einem der vorhergehenden Ansprüche, das ferner aufweist:
ein erstes und ein zweites sicheres Element (410, 432), wobei das erste sichere Element (410) zum sicheren Zwischenspeichern von Daten für die erste Steuerung (406) verbunden ist, und das zweite sichere Element (432) zum sicheren Zwischenspeichern von Daten für die zweite Steuerung (426) verbunden ist.

8. Lesersystem (108) nach einem der vorhergehenden Ansprüche, wobei das Lesersystem (108) ferner eine UWB-Frontend-Schaltung (434), die zwischen der zweiten Steuerung (426) und der zweiten Antenne (428a) zur Ermöglichung einer Kommunikation über UWB verbunden ist, aufweist.

9. Lesersystem (108) nach Anspruch 8, das ferner eine weitere Antenne (428b), die zur weiteren Ermöglichung einer Kommunikation über UWB mit der UWB-Frontend-Schaltung (434) verbunden ist, aufweist.

10. Lesersystem (108) nach einem der vorhergehenden Ansprüche, das ferner eine dritte und eine vierte Antenne (408b, 408c) aufweist, wobei die erste Steuerung (406) dazu ausgebildet ist, unter Verwendung von Hochfrequenz-Identifikation über die dritte Antenne (408c) zu kommunizieren und unter Verwendung von Nahfeldkommunikation über die vierte Antenne (408b) zu kommunizieren.

11. Lesersystem (108) nach einem der vorhergehenden Ansprüche, das ferner aufweist:
eine Leserschaltung, die aufweist:
die erste Antenne (408a); und
die erste Steuerung (406); und
eine Ultrabreitband (UWB)-Schaltung, die aufweist:
die zweite Antenne (428a), wobei die zweite Antenne (428a) eine UWB-Antenne ist; und
die zweite Steuerung (426).

## Revendications

1. Système de lecture (108) destiné à un système de contrôle d'accès physique, le système de lecture (108) comprenant :
- une première et une deuxième antennes (408a ; 428a) ;
- un premier contrôleur (406) configuré pour communiquer avec un dispositif d'identification à l'aide d'un protocole de communication à faible consommation d'énergie via la première antenne (408a) afin d'échanger une information d'identification avec ledit dispositif d'identification, dans lequel le premier contrôleur est en outre configuré pour établir un secret avec le dispositif d'identification afin de faciliter une télémétrie UWB ; et
- un deuxième contrôleur (426) configuré pour communiquer avec le dispositif d'identification utilisant une bande ultra-large (UWB) via la deuxième antenne (428a) afin d'effectuer une télémétrie UWB pour le dispositif d'identification, dans lequel le deuxième contrôleur (426) est configuré pour communiquer avec le premier contrôleur (406) via une liaison de communication (404) et effectue la télémétrie UWB pour le dispositif d'identification dès réception de données provenant du premier contrôleur (406), lesdites données comprenant au moins le secret.

2. Système de lecture (108) selon la revendication 1, dans lequel la liaison de communication est une liaison de communication sans fil (404).

3. Système de lecture selon la revendication 2, dans lequel le premier contrôleur (406) est configuré pour communiquer avec le deuxième contrôleur (426) sur la liaison de communication sans fil (404) en utilisant le protocole de communication à faible consommation d'énergie.

4. Système de lecture (108) selon l'une quelconque des revendications précédentes, dans lequel le protocole de communication à faible consommation d'énergie est Bluetooth Low Energy.

5. Système de lecture (108) selon l'une quelconque des revendications précédentes, comprenant en outre :
un premier boîtier, dans lequel le premier contrôleur (406) est positionné à l'intérieur du premier boîtier ; et
un deuxième boîtier distinct du premier boîtier, dans lequel le deuxième contrôleur (426) est positionné à l'intérieur du deuxième boîtier.

6. Système de lecture (108) selon la revendication 5, comprenant en outre une batterie (430) placée à l'intérieur du deuxième boîtier et configurée pour alimenter le deuxième contrôleur (426).

7. Système de lecture (108) selon l'une quelconque des revendications précédentes, comprenant en outre :
un premier et un deuxième éléments sécurisés (410, 432), dans lequel le premier élément sécurisé (410) est connecté pour mettre en cache de manière sécurisée des données destinées au premier contrôleur (406) et le deuxième élément sécurisé (432) est connecté pour mettre en cache de manière sécurisée des données destinées au deuxième contrôleur (426).

8. Système de lecture (108) selon l'une quelconque des revendications précédentes, dans lequel le système de lecture (108) comprend en outre un circuit frontal UWB (434) connecté entre le deuxième contrôleur (426) et la deuxième antenne (428a) pour faciliter la communication via UWB.

9. Système de lecture (108) selon la revendication 8, comprenant en outre une antenne supplémentaire (428b) connectée au circuit frontal UWB (434) afin de faciliter davantage la communication via UWB.

10. Système de lecture (108) selon l'une quelconque des revendications précédentes, comprenant en outre des troisième et quatrième antennes (408b, 408c), dans lequel le premier contrôleur (406) est configuré pour communiquer en utilisant une identification par radiofréquence via la troisième antenne (408c) et pour communiquer en utilisant une communication en champ proche via la quatrième antenne (408b).

11. Système de lecture (108) selon l'une quelconque des revendications précédentes, comprenant en outre :
un circuit de lecture comprenant :
la première antenne (408a) ; et
le premier contrôleur (406) ; et
un circuit à bande ultra-large (UWB) comprenant :
la deuxième antenne (428a), où la deuxième antenne (428a) étant une antenne UWB ; et
le deuxième contrôleur (426).
